# EUROPÄISCHE PATENTSCHRIFT

(11) **EP 1 387 996 B1**
(45) Veröffentlichungstag und Bekanntmachung des Hinweises auf die Patenterteilung: **26.09.2007**
(21) Anmeldenummer: 02718145.2
(22) Anmeldetag: 19.02.2002
(51) Int. Cl.: G01B 7/00, G01B 11/00

(54) **VERFAHREN ZUR VERMESSUNG UND/ODER BEARBEITUNG EINES WERKSTÜCKS**
METHOD FOR MEASURING AND/OR MACHINING A WORKPIECE
PROCEDE POUR MESURER ET/OU USINER UNE PIECE

(30) Priorität: 20.02.2001 DE 10108139
(43) Veröffentlichungstag der Anmeldung: 11.02.2004
(73) Patentinhaber: Max Bögl Bauunternehmung GmbH & Co. KG, 92301 Neumarkt (DE); CBP Guideway Systems GmbH, 80779 München (DE)
(72) Erfinder: FEIX, Jürgen, 82110 Germering (DE); REICHEL, Dieter, 92318 Neumarkt (DE); LINDNER, Erich, 91275 Auerbach-Nasnitz (DE); WAIDHAUSER, Ralf, 92318 Neumarkt (DE)
(74) Vertreter: Bergmeier, Werner
(86) Internationale Anmeldenummer: PCT/EP2002/001734
(87) Internationale Veröffentlichungsnummer: WO 2002/066922

(56) Entgegenhaltungen:
- EP-A- 0 987 370
- EP-B- 0 700 269
- WO-A-88/07656

## Beschreibung

Die Erfindung betrifft ein Verfahren zur Vermessung und/oder Bearbeitung eines Werkstücks, insbesondere von Modulen im Bauwesen, mittels einer Meß- bzw. Bearbeitungseinrichtung.

Bei bekannten derartigen Verfahren werden Werkstücke von relativ kleinen Ausmaßen beispielsweise in eine Fräsmaschine eingespannt und nachfolgend mit dem Fräswerkzeug bearbeitet. Bei größeren Werkstücken wird die Meß- oder Bearbeitungseinrichtung, beispielsweise ein Werkzeug an einem Roboterarm, an das Werkstück herangeführt, wobei Sender-/Empfängereinheiten an dem Roboter Signale auf das Werkstück richten und die zurückkommenden Signale empfangen. Aufgrund der Signale wird dann die Form und Lage des Werkstücks und die Relativposition des Werkzeugs hierzu ermittelt. Daraus wird dann über einen Computer errechnet, welche Bewegungen das Werkzeug zum Heranfahren und zum Bearbeiten des Werkstücks ausführen muß.

Insbesondere bei größeren Werkstücken hat dieses Verfahren den Nachteil, daß die Erfassung relativ aufwendig und wenig flexibel ist und zudem eine sehr genaue Justierung einer oder mehrerer Sender-/Empfängereinheiten notwendig ist.

Es ist Aufgabe der vorliegenden Erfindung, ein Verfahren der eingangs genannten Art derart weiterzubilden, daß eine Vermessung und/oder Bearbeitung von Werkstücken, insbesondere solche von erheblicher Größe wie beispielsweise große Baumodule, einfach und schnell vorgenommen werden kann.

Diese Aufgabe wird bei einem Verfahren der eingangs genannten Art dadurch gelöst, daß mit Hilfe mindestens einer Erfassungseinrichtung das Werkstück in einem ersten Koordinatensystem erfaßt wird und daß die relativ zum Werkstück bewegliche Meß- bzw. Bearbeitungseinrichtung in einem zweiten Koordinatensystem unabhängig von Lage und Form des Werkstücks erfaßt wird, und daß die Koordinaten des Werkstücks einerseits und die Koordinaten der Meß- bzw. Bearbeitungseinrichtung andererseits mittels eines Computers miteinander in Bezug gebracht werden, um die Meß- bzw. Bearbeitungseinrichtung zur Vermessung bzw. Bearbeitung des Werkstücks anzusteuern.

Hierbei ist zwischen den Begriffen Erfassung einerseits und Messung bzw. Vermessung andererseits zu unterscheiden. Die sog. Erfassung betrifft im Sinne dieser Erfindung die Ermittlung von Lage und Form des Werkstücks sowie zumindest der Lage bzw. der Position der Meß- bzw. Bearbeitungseinrichtung. Ihre Form kann optional schon im Computer abgespeichert sein oder wird ebenfalls erfaßt. Die Erfassungseinrichtung umfaßt vorzugsweise ein Sendemodul - es kann unter Umständen beispielsweise auch Umgebungslicht genügen - und obligatorisch ein Empfangsmodul.

Eine Messung bzw. Vermessung im Sinne dieser Erfindung stellt hingegen eine Aktion einer Meßeinrichtung an dem Werkstück dar, so wie die Bearbeitung eine Aktion einer Bearbeitungseinrichtung ist. Die Messung kann hierbei mit Berührungskontakt oder berührungslos an dem Werkstück vorgenommen werden. Gemessen werden können z.B. verschiedene physikalische und/oder chemische Größen, darunter die genaue Form des Werkstücks, Oberflächeneigenschaften, Farbe, Materialzusammensetzung, Feuchtegehalt, elektrische Größen, usw.

Der Grundgedanke der Erfindung besteht darin, das Werkstück in einem eigenen Koordinatensystem einerseits und die Meß- bzw. Bearbeitungseinrichtung in einem eigenen Koordinatensystem andererseits getrennt zu erfassen und zu speichern.

Wenn das Werkstück - wie bei einer besonders bevorzugten Variante der Erfindung - ortsfest ist, wird das Koordinatensystem des Werkstücks nach dessen Erfassung zweckmäßigerweise als fest angenommen. Dieses Vorgehen bietet sich insbesondere dann an, wenn das Werkstück große räumliche Abmessungen und/oder ein hohes Gewicht - beispielsweise ein großes Baumodul - aufweist und daher nur mit hohem Aufwand in einem vorgegebenen äußeren Koordinatensystem zu justieren wäre.

Die Vorteile der Erfindung sind insbesondere darin zu sehen, daß keine direkte und aufwendige Kommunikation zwischen Meß- bzw. Werkzeug, d.h. Meß- bzw. Bearbeitungseinrichtung, einerseits und Werkstück andererseits notwendig ist. Mittels des erfindungsgemäßen Verfahrens kann relativ schnell sowohl das Werkstück als auch die Meß- bzw. Bearbeitungseinrichtung erfaßt werden, um dann mittels eines Computers die Positionierung der Meß- bzw. Bearbeitungseinrichtung vorzunehmen. Desweiteren hat die Erfindung den Vorteil, daß die Erfassungseinrichtung weitgehend unabhängig von der Ausgestaltung des Werkstücks und der Meß- bzw. Bearbeitungseinrichtung aufgestellt werden kann. Bei einer mobilen Ausbildung der Erfassungseinrichtung ist ein weitgehend frei wählbares Aufstellen im Raum möglich. Es ist zudem keine exakte Führung oder Positionierung der Meß- bzw. Bearbeitungseinrichtung vor Vermessung bzw. Bearbeitung aufgrund der funktionellen Trennung der beiden Koordinatensysteme vonnöten.

Vorteilhafterweise werden das erste und das zweite Koordinatensystem in einem dritten Koordinatensystem in den besagten Bezug gebracht. Das dritte Koordinatensystem ist hierbei zweckmäßigerweise ein globales, d.h. feststehendes Koordinatensystem, In diesem Fall wird sowohl das erste als auch das zweite Koordinatensystem in das dritte Koordinatensystem transformiert und ausgehend von diesem Koordinatensystem die Vermessung bzw. Bearbeitung des Werkstücks gesteuert.

Das dritte, vorteilhafterweise globale Koordinatensystem wird zweckmäßigerweise mittels der Erfassungseinrichtung selbst festgelegt, wobei zweckmäßigerweise direkte Signale vom Sendemodul von fest im Raum angeordneten Sensoren empfangen werden. Sendemodul und Sensoren sind hierbei Teil der Erfassungseinrichtung. Aufgrund der Detektion der direkt an die Sensoren ausgesandten und von diesen empfangenen Signale einerseits und der indirekten Signale andererseits, welche von dem Werkstück (bzw. der Meß- bzw. Bearbeitungseinrichtung) zu den Sensoren gelangen, kann mit Hilfe des Computers auf die Beziehung zwischen dem erstem (bzw. dem zweiten) Koordinatensystem und dem dritten Koordinatensystem geschlossen und die erwähnten Transformationen in das dritte Koordinatensystem vorgenommen werden.

Die Festlegung des dritten Koordinatensystem kommt zweckmäßigerweise einer Kalibrierung des Erfassungssystems im Raum gleich. Es ist aufgrund dieser Kalibrierung auch möglich, das erste und das zweite Koordinatensystem ohne explizite Einbeziehung des dritten Koordinatensystem in Beziehung zu setzen. Hierbei wird mit Hilfe der Kalibrierdaten das zweite Koordinatensystem in das erste transformiert oder umgekehrt.

Bei einer vorteilhaften Weiterbildung des Verfahrens wird das Werkstück lediglich vor der Vermessung bzw. Bearbeitung im ersten Koordinatensystem erfaßt. Wenn das Werkstück während der Vermessung bzw. Bearbeitung ortsfest bleibt, kann diese einmalige Erfassung genügen. Am Ende der Vermessung bzw. Bearbeitung kann selbstverständlich eine Erfolgskontrolle vorgenommen werden.

Bevorzugt wird das Werkstück - insbesondere im Rahmen der einmaligen Erfassung - in mindestens zwei Erfassungsteilschritten erfaßt. In dem einen Erfassungsteilschritt wird ein relativ großer Abschnitt des Werkstücks oder gleich das gesamte Werkstück mit einer bestimmten Auflösung erfaßt. In einem anderen Erfassungsteilschritt wird die Erfassungsvorrichtung näher an das Werkstück herangebracht und dann ein Ausschnitt des zuvor erfaßten Abschnitts mit einer feineren Auflösung aufgenommen. Die in den beiden Erfassungsteilschritten ermittelten Daten werden anschließend über einen Computer abgeglichen, um ein möglichst vollständiges dreidimensionales Bild des Werkstücks zu erhalten. Nach der Erfassung können die Daten des Werkstücks dann für die Bearbeitung durch die Bearbeitungseinrichtung oder für eine detaillierte Vermessung des Werkstücks verwendet werden.

Durch die Erfassung der Lage und der Form des Werkstücks wird bevorzugt eine Abweichung des Ist-Zustandes des Werkstücks vom Soll-Zustand berechnet, um aus den Differenzdaten die notwendigen Bearbeitungsschritte computerunterstützt zu berechnen.

Für eine ungefähre Annäherung an das Werkstück braucht die Meß- bzw. Bearbeitungseinrichtung in ihrem zweiten Koordinatensystem lediglich einmal erfaßt zu werden. Für eine genauere Vermessung bzw. für eine Bearbeitung des Werkstücks ist es hingegen vorteilhaft, wenn eine wiederholte Erfassung der Meß- bzw. Bearbeitungseinrichtung vorgenommen wird. Dies kann vorzugsweise in mehreren zeitlich aufeinanderfolgenden Schritten oder kontinuierlich realisiert werden. Auf diese Weise ist eine hochpräzise und ständig kontrollierte Vermessung bzw. Bearbeitung des Werkstücks aufgrund der aktuellen Erfassungsdaten möglich.

Die Erfassung des Werkstücks und der Meß- bzw. Bearbeitungseinrichtung kann prinzipiell mit verschiedensten Verfahren durchgeführt werden, beispielsweise mittels Ultraschall, Theodoliten sowie diversen bildgebenden Verfahren. Bevorzugt werden von mindestens einem Sendemodul der Erfassungseinrichtung ausgesandte Laserstrahlen verwendet. Eine insbesonders geeignete Vorrichtung - beispielsweise ist eine solche unter dem Handelsnamen "Lasertracker" bekannt - basiert auf dem Prinzip der Laser-Interferometrie, wobei mindestens ein Laser in geeignetem Abstand vor dem Werkstück plaziert wird. Ihr Standort im Raum und damit relativ zum Werkstück und zur Meß- bzw. Bearbeitungseinrichtung wird zweckmäßigerweise durch mindestens einen, bevorzugt durch mehrere im Raum verteilte Sensoren bestimmt, die ein Empfangsmodul der Erfassungseinrichtung darstellen.

Vorzugsweise werden in unmittelbarer Nähe der zu erfassenden Fläche plazierte Reflexionselemente verwendet, welche von dem mindestens einen Laser ausgehende Laserstrahlen reflektieren. Die Reflexionselemente weisen vorzugsweise eine kugelförmige Fläche auf, die dem Laser zugewandt ist und an der die vom Laser ausgehenden Strahlen zu den Sensoren im Raum reflektiert werden. Da die betreffende Fläche genau erfaßt werden muß, sind diese Reflexionselemente zweckmäßigerweise klein (im mm- oder cm-Bereich) gegenüber der zu erfassenden Fläche ausgebildet. Die Reflexionselemente werden beispielsweise in zuvor mit definierter Tiefe hergestellte Bohrungen eingesetzt. Es sind weiterhin Laservorrichtungen bekannt, die derart gesteuert werden, daß sie selbst nach diesen Reflexionselementen suchen. Alternativ ist eine manuelle Führung des mindestens einen Lasers möglich.

In einer vorteilhaften Ausführungsform der Erfindung wird die Erfassungseinrichtung bei jeder Erfassung der Meß- bzw. Bearbeitungseinrichtung ortsfest angeordnet. Die Erfassungseinrichtung bleibt hierbei entweder an ihrem alten Ort oder wird vor der nächsten Erfassung an einem anderen, günstigeren Ort aufgestellt. Dieses Vorgehen hat den Vorteil, daß die Erfassung auf sehr einfache Weise und vor allem mit relativ großer Flexibilität hinsichtlich der Aufstellung der Erfassungseinrichtung vorgenommen werden kann. Zudem kann es ausreichen, lediglich eine einzige Erfassungseinrichtung zu verwenden, um nacheinander das Werkstück und die Meß- bzw. Bearbeitungseinrichtung - evtl. wiederholt - zu erfassen.

In einer alternativen Variante der Erfindung wird die Erfassungseinrichtung bei der Erfassung der Meß- bzw. Bearbeitungseinrichtung definiert mit dieser im zweiten Koordinatensystem mitbewegt. Hierzu ist die Erfassungseinrichtung bevorzugt an der Meß- bzw. Bearbeitungseinrichtung befestigt und folgt ihren Bewegungen. Dies kann zwar eine aufwendigere Konstruktion erforderlich machen, aber die Präzision der Erfassung läßt sich ggf. steigern. Je nach Komplexität der Ausgestaltung der Meß- bzw. Bearbeitungseinrichtung sind jedoch evtl. mehrere Erfassungseinrichtungen notwendig.

Besonders bevorzugt weist die Meß- bzw. Bearbeitungseinrichtung mindestens eine, jedoch bevorzugt mehrere Meß- und/oder Bearbeitungseinheiten auf, die vorzugsweise einzeln ansteuerbar sind. Eine solche Konstruktion bietet sich z.B. an, wenn mehrere gleichförmige Bearbeitungsstellen des Werkstücks in definiertem Abstand zueinander in gleicher Weise zu bearbeiten sind.

Ein bevorzugter Verfahrensablauf besteht darin, daß die Meß- bzw. Bearbeitungseinrichtung nahe an das Werkstück herangebracht wird und nachfolgend die einzelnen Meß- bzw. Bearbeitungseinheiten in ihre Arbeitspositionen verfahren werden, um das Werkstück zu vermessen bzw. zu bearbeiten. Dieses Vorgehen in zwei Schritten stellt sich als schnell und einfach dar, wobei der erste Schritt der Annäherung der Meß- bzw. Bearbeitungseinrichtung an das Werkstück keiner exakten Führung und/oder Positionierung der Meß- bzw. Bearbeitungseinrichtung bedarf. Im zweiten Schritt der Feinvermessung bzw. Bearbeitung sind dann wiederholte Erfassungsschritte zweckmäßig.

Für eine Vermessung bzw. Bearbeitung des Werkstücks kann die Meß- bzw. Bearbeitungseinrichtung entweder berührend auf das Werkstück aufgesetzt werden oder berührungslos neben dem Werkstück, beispielsweise an einem Portalkran angeordnet, plaziert werden.

Die Erfindung ist beispielsweise bei der Bearbeitung von Verbindungskonsolen einsetzbar, welche in Fahrwegträgern für Schienenfahrzeuge und insbesondere Magnetschwebebahnfahrzeuge eingearbeitet sind. Nach ihrer Bearbeitung werden an den Verbindungskonsolen Funktionsebenenträger befestigt, welche beispielsweise Statoren für den Fahrzeugantrieb umfassen. Das Werkstück im Sinne dieser Erfindung ist hierbei der Fahrwerkträger aus Spannbeton samt den daran angebrachten Verbindungskonsolen.

Vorteilhafte Weiterbildungen der Erfindung sind durch die Merkmale der Unteransprüche gekennzeichnet.

Im folgenden wird die Erfindung anhand der Zeichnung näher erläutert. Es zeigen:
- Fig. 1: einen Fahrweg mit einer Magnetschwebebahn im Querschnitt; und
- Fig. 2: eine Vorderansicht einer Bearbeitungseinrichtung sowie einer zu bearbeitenden Verbindungskonsole an einem Träger;
- Fig. 3: eine Vorderansicht eines Trägers mit aufgesetzter Bearbeitungseinrichtung sowie eine Erfassungseinrichtung; und
- Fig. 4: eine schematische Ansicht des Verfahrensablaufes.

Beispielhaft wird das Verfahren anhand der Bearbeitung von Baumodulen eines hybriden Trägersystems für schienengebundene Fahrzeuge beschrieben. In der EP 0 987 370 A1, deren Offenbarungsgehalt hiermit eingeschlossen wird, ist ein solches Trägersystem im Detail beschrieben.

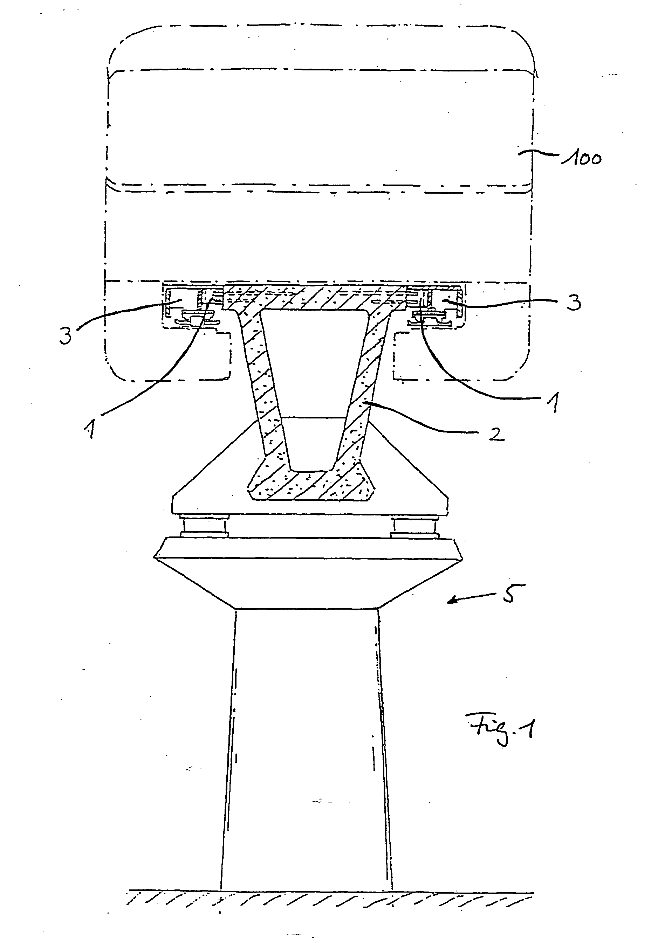

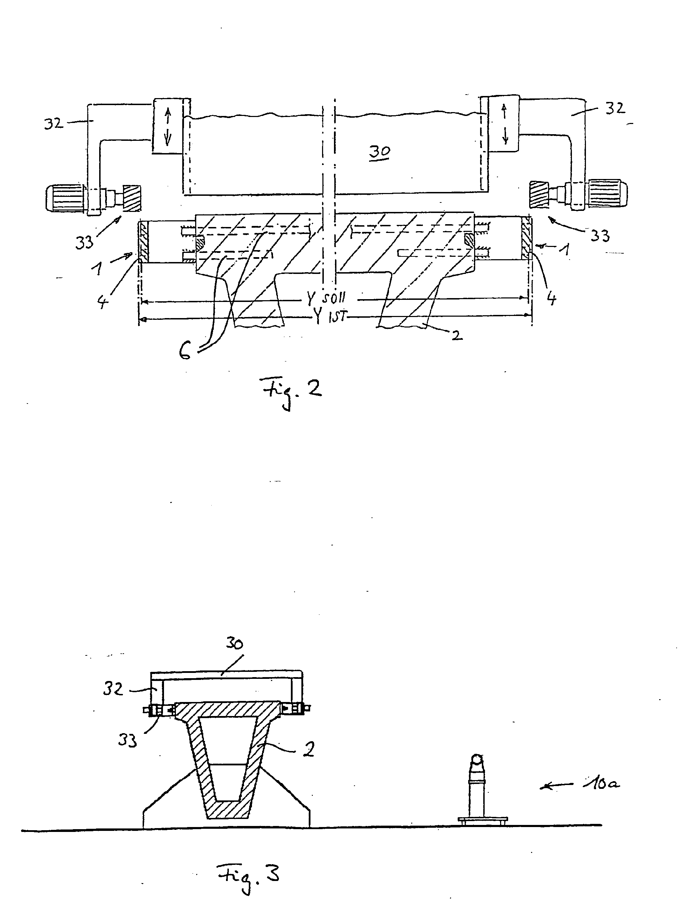

In Fig. 1 ist eine Fahrbahn für eine Magnetschwebebahn 100 im Querschnitt dargestellt. Träger 2 aus vorzugsweise Spannbeton werden auf der Baustelle auf Stützen 5 befestigt. Es werden hierbei mehrere Träger 2 in Verlaufsrichtung der Fahrbahn hintereinander aufgestellt. Seitlich an jedem Träger 2 sind in gleichem Abstand Verbindungskonsolen 1 aus vorzugsweise Stahl angeordnet. Zur Befestigung ist jede Verbindungskonsole 1 mit einem Zuganker 6 (s. Fig. 2) verschweißt oder verschraubt, der in den Spannbeton des Trägers 2 eingelassen ist. Jede Konsole 1 weist eine Kopfplatte 4 auf, an der Funktionsebenenträger 3 angebracht werden. Hierzu muß jede Kopfplatte 4 genau erfaßt und bei Bedarf bearbeitet werden.

In Fig. 2 ist ein Ausschnitt eines Trägers 2 mit zu beiden Seiten mit Hilfe von Zugankern 6 daran befestigten Verbindungskonsolen 1 dargestellt. Der Ist-Abstand der beiden Kopfflächen 4 der beiden Verbindungskonsolen ist mit Y_{IST} bezeichnet, der geforderte Abstand mit Y_{SOLL.} Um den Abstand der Kopfflächen 4 auf den geforderten Wert zu bringen, ist eine Bearbeitungseinrichtung 30 auf dem Träger 2 vorgesehen, der zu beiden Seiten in der Höhe verstellbare (s. Pfeile) Arme 32 mit endseitig angeordneten Fräsköpfen 33 aufweist. Durch Auf- und Abbewegen des jeweiligen Arms 32 wird die jeweilige Kopffläche 4 bearbeitet.

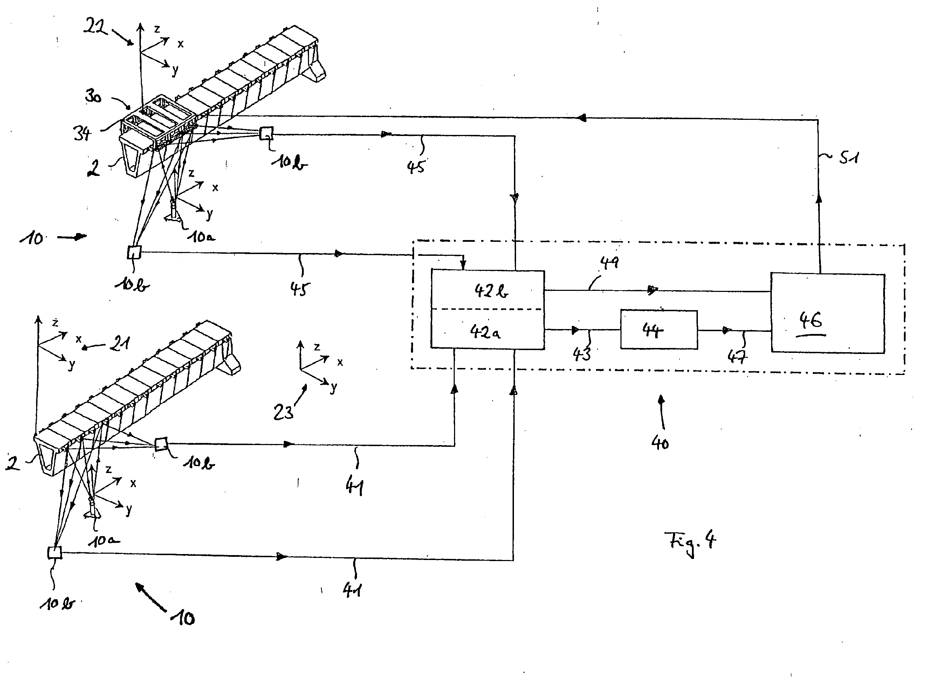

In der Fig. 3 ist eine schematische Vorderansicht eines gesamten Trägers 2 mit aufgesetzter Bearbeitungseinrichtung 30 dargestellt. Seitlich neben dem Träger 2 ist ein Laser 10a einer Erfassungseinrichtung 10 aufgestellt, die in unabhängigen Schritten einerseits den Träger 2 und insbesondere die Verbindungskonsolen 1 und andererseits die Bearbeitungseinrichtung 30 erfaßt.

Anhand der schematischen Darstellung der Fig. 4 wird nachfolgend das erfindungsgemäße Verfahren für diese Erfassung und ggf. Bearbeitung beschrieben. Zuerst wird ein Laser 10a als Teil der Erfassungseinrichtung 10 vor dem - aufgrund seiner Größe und Schwere - ortsfesten Träger 2 plaziert und der Träger 2 oder ein Trägerabschnitt erfaßt. Die in Form von geraden Strichen 11 mit Pfeilköpfen dargestellten Laserstrahlen werden an dem Träger 2 reflektiert und gelangen zu einem oder mehreren Meßelementen 10b, beispielsweise Meßsensoren, deren Meßsignale über Leitungen 41 an eine Rechnereinheit 42a eines Computers 40 weitergeleitet werden, um aus der Laufzeit und der Richtung der zurückkommenden Laserstrahlen Form und Lage des Trägers 2 bzw. der Verbindungskonsolen 1, d.h. des Werkstücks, zu ermitteln.

Es ist insbesondere bekannt, Kugeln bzw. Teilkugeln, die im Verhältnis zur zu erfassenden Fläche einen kleinen Durchmesser aufweisen, an definierten Positionen dieser Fläche anzuordnen, um anhand der von der Kugeloberfläche reflektierten Strahlen Aussagen über den Flächenverlauf zu erhalten. Diese Kugeln bzw. Teilkugeln sind in der Fig. 4 nicht dargestellt.

In einem solchen Erfassungsschritt wird beispielsweise eine Genauigkeit von ca. 0,5 mm in den drei Raumrichtungen erreicht. Um die geforderten Toleranzen bei einer eventuellen nachfolgenden Bearbeitung zu gewährleisten, kann ein zweiter Erfassungsteilschritt vorgenommen werden. Hierzu wird ein Teilbereich des zuvor vermessenen Trägerabschnitts vorzugsweise mittels derselben Erfassungseinrichtung 10 erfaßt, wobei dieser Schritt in Fig. 4 nicht dargestellt ist. Es kann hierbei beispielsweise eine Erfassungsgenauigkeit von ca. 0,03 mm erreicht werden. Aus den Meßsignalen der beiden Erfassungsteilschritte wird mittels der Rechnereinheit 42a die Ist-Raumkurve des Trägers 2 in einem ersten Koordinatensystem 21 berechnet, die dann über eine Leitung 43 an ein Vergleichsmodul 44 weitergeleitet wird, damit diese die Ist-Geometrie mit der eingespeicherten Soll-Raumkurve des Trägers 2 vergleichen kann. Diese Daten=dienen dann zur nachfolgenden Bearbeitung der Kopfplatten 4.

Zu dieser Bearbeitung ist die in den Fig. 2 und 3 dargestellte Bearbeitungseinrichtung 30 vorgesehen, die gleichfalls mittels der Erfassungseinrichtung 10 erfaßt wird. Die Erfassungsdaten dienen insbesondere der Ermittlung der Position der Bearbeitungseinrichtung 30 in einem zweiten Koordinatensystem 22, welches erfindungsgemäß unabhängig vom ersten Koordinatensystem 21 ist.

Hierzu wird die Bearbeitungseinrichtung 30 ohne genauere Justierung auf die Träger 2 aufgesetzt, da die Bearbeitungseinrichtung 30 aufgrund der funktionellen Trennung der Koordinatensysteme 21, 22 zunächst keiner exakten Führung oder Positionierung bedarf. Anschließend wird die Bearbeitungseinrichtung 30 mittels der Erfassungseinrichtung 10 erfaßt. Es werden hierzu bevorzugt dieselben Meßelemente 10b wie zur Erfassung des Trägers 2 verwendet, welche die Meßsignale dann über Leitungen 45 an die Rechnereinheit 42b des Computers 40 weitergeben.

Die in den Fig. 2 bis 4 dargestellte Bearbeitungseinrichtung 30 ist auf den Träger 2 aufgesetzt. Bei dieser Ausführungsform weist die Bearbeitungseinrichtung 30 ein Gestell 34 auf (Fig. 4), das sich über den Abstand von mehreren Kopfplatten 4 erstreckt. An dem Gestell 34 sind in Längsrichtung des Trägers 2 versetzt mehrere Bearbeitungseinheiten mit den in den Fig. 2 und 3 dargestellten Fräsköpfen 33 den Kopfplatten 4 gegenüber angeordnet, die jeweils die Bearbeitung einer Kopfplatte 4 übernehmen. Hierdurch kann die Bearbeitung der Kopfplatten 4 des Trägers 2 abschnittsweise erfolgen, wobei vorteilhafterweise die Bearbeitung gleichzeitig an beiden Trägerseiten durchgeführt wird.

Nach Bearbeitung eines Abschnitts mit mehreren Kopfplatten 4 wird das Gestell 34 in den nächsten zu bearbeitenden Abschnitt verschoben, die Bearbeitungseinheit 30 bzw. die Bearbeitungseinheiten erfaßt und nachfolgend die Bearbeitung durchgeführt.

Bei einer alternativen, nicht dargestellten Ausführungsform der Erfindung kann die Bearbeitungseinrichtung 30 bzw. können die Bearbeitungseinheiten beispielsweise auch an einem längs der Trägers 2 verfahrbaren Portalkran o.ä. angeordnet werden, der keinen Berührungskontakt mit dem Träger 2 hat.

Es ist zweckmäßig, wenn die Bearbeitungseinrichtung 30 während des Bearbeitens der Kopfplatten 4 wiederholt erfaßt wird. Dies kann schrittweise oder auch kontinuierlich geschehen. Diese Vorgehensweise erlaubt eine ständige Kontrolle über den Fortgang der Bearbeitung sowie die Justierung der Bearbeitungseinrichtung 30.

Um der Bearbeitungseinrichtung 30 die notwendigen Bearbeitungsbefehle geben zu können, müssen die Erfassungsdaten der Erfassungseinrichtung 10 und die Erfassungsdaten der Bearbeitungseinrichtung 30 miteinander in Beziehung gebracht werden. Dies bedeutet, daß das erste und das zweite Koordinatensystem 21, 22 zu korrelieren sind. Zu diesem Zweck werden die jeweiligen Signale bzw. Datensätze über Leitungen 47, 49 in eine Rechnereinheit 46 des Computers 40 gespeist und dort die räumlichen Bezüge zwischen Träger 2 und Bearbeitungseinrichtung 30 hergestellt und daraus Bearbeitungsbefehle hergeleitet, die über eine Leitung 51 an die Bearbeitungseinrichtung 30 weitergegeben werden. In einem solchen Bearbeitungsschritt werden insbesondere die entsprechenden Flächen der Kopfplatten 4 zur paßgenauen Montage der Funktionsebenenträger 3 gefräst.

Zur Herstellung der Korrelation des ersten und des zweiten Koordinatensystems 21, 22 kann eine Koordinatentransformation von dem einen Koordinatensystem in das andere vorgenommen werden. Um dies zu ermöglichen, muß gewährleistet sein, daß die Position des Laser 10a im Raum bekannt ist, d.h. seine Lage muß kalibriert werden. Hierzu bietet es sich an, daß vom Laser 10a ausgesandte Strahlen direkt von den Empfängern 10b empfangen werden und von den Rechnereinheiten 42a, 42b ausgewertet werden (diese direkten Strahlen sind der Übersichtlichkeit halber in Fig. 4 nicht eingezeichnet). Aus diesen Daten kann dann die Position der Erfassungseinrichtung 10 im Raum ermittelt und die gewünschte Koordinaten-Transformation vorgenommen werden.

Alternativ werden das erste und das zweite Koordinatensystem 21, 22 in einem dritten, globalen (d.h. raumfesten) Koordinatensystem 23 in Beziehung gebracht und in diesem die Befehle zur Bearbeitung des Werkstücks 1, 2 generiert. Hierzu ist es ebenfalls notwendig, die Erfassungseinrichtung 10 im Raum zu bestimmen bzw. zu kalibrieren, vorteilhafterweise auf dieselbe Art wie zuvor beschrieben.

Vorteilhafterweise ist die Erfassungseinrichtung 10 mobil ausgebildet, was insbesondere bei der Erfassung in mehreren Teilschritten von Vorteil ist. Um z.B. die feinere Auflösung beim oben erwähnten zweiten Erfassungsteilschritt für einen Ausschnitt des Trägers 2 zu erreichen, wird die Erfassungseinrichtung 10 näher am Träger 2 plaziert. Auch während der Bearbeitung der Kopfplatten 4 kann die Erfassungseinrichtung 10 anders positioniert werden, um der Bewegung der Bearbeitungseinrichtung 30 Rechnung zu tragen.

Die Erfassungseinrichtung 10 kann vorteilhafterweise auch an die Bearbeitungseinrichtung 30 gekoppelt bzw. an dieser befestigt werden.

Statt der oben beschriebenen Bearbeitung mit einer Bearbeitungseinrichtung ist mittels der erfindungsgemäßen Verfahrens auch eine Vermessung mittels einer entsprechend ausgebildeten Meßeinrichtung möglich (nicht dargestellt). Gemessen werden können z.B. Temperatur, Farbe, elektrische Größen, Oberflächenstrukturen usw..

Die Erfindung läßt sich sowohl bei während der Erfassung und während der Vermessung bzw. Bearbeitung ortsfest verbleibendem Werkstück als auch bei sich bewegendem Werkstück anwenden. Bei der letzteren Variante ist eine mehrmalige Erfassung des Werkstücks zweckmäßig.

## Patentansprüche

1. Verfahren zur Vermessung und/oder Bearbeitung eines zumindest teilweise aus Beton bestehenden großen Werkstücks (1, 2) aus dem Bauwesen, insbesondere einem Fahrwegträger für schienengebundene Fahrzeuge, mittels einer Meß- bzw. Bearbeitungseinrichtung (30), wobei mit Hilfe mindestens einer Erfassungseinrichtung (10) das Werkstück (1, 2) in einem ersten Koordinatensystem (21) erfaßt wird und daß die relativ zum Werkstück (1, 2) bewegliche Meß- bzw. Bearbeitungseinrichtung (30) in einem zweiten Koordinatensystem (22) unabhängig von Lage und Form des Werkstücks (1, 2) erfaßt wird, und daß die Koordinaten des Werkstücks (1, 2) einerseits und die Koordinaten der Meß- bzw. Bearbeitungseinrichtung (30) andererseits mittels eines Computers (40) miteinander in Bezug gebracht werden, um die Meß- bzw. Bearbeitungseinrichtung (30) zur Vermessung bzw. Bearbeitung des Werkstücks (1, 2) anzusteuern.

2. Verfahren nach Anspruch 1, **dadurch gekennzeichnet, daß** das Werkstück (1, 2) ortsfest angeordnet wird.

3. Verfahren nach Anspruch 1 oder 2, **dadurch gekennzeichnet, daß** das erste und das zweite Koordinatensystem (21, 22) in einem dritten Koordinatensystem (23) miteinander in Bezug gebracht werden.

4. Verfahren nach einem der vorhergehenden Ansprüche, **dadurch gekennzeichnet, daß** das Werkstück (1, 2) in mindestens zwei Erfassungsteilschritten erfaßt wird, wobei in seinem Erfassungsteilschritt ein größerer Bereich des Werkstücks (1, 2) mit einer geringeren Auflösung und in einem anderen, feiner auflösenden Erfassungsteilschritt ein Teilbereich des größeren Bereichs erfaßt wird, und daß die in den Erfassungsteilschritten ermittelten Daten über einen Computer (40) abgeglichen werden.

5. Verfahren nach einem der vorhergehenden Ansprüche, **dadurch gekennzeichnet, daß** anhand der erfaßten Form des Werkstücks (1, 2) eine Abweichung seines Ist-Zustandes von seinem Soll-Zustand zur Bestimmung der notwendigen Bearbeitungsschritte berechnet wird.

6. Verfahren nach einem der vorhergehenden Ansprüche, **dadurch gekennzeichnet, daß** die Meß- bzw. Bearbeitungseinrichtung (30) in dem zweiten Koordinatensystem (22) während des Messens bzw. Bearbeitens des Werkstücks (1, 2) wiederholt und hierbei bevorzugt schrittweise oder kontinuierlich erfaßt wird.

7. Verfahren nach einem der vorhergehenden Ansprüche, **dadurch gekennzeichnet, daß** Meßstrahlen, insbesondere Laserstrahlen, von mindestens einem Sendemodul (10a) der Erfassungseinrichtung (10) zum Werkstück (1, 2) und/oder zur Meß- bzw. Bearbeitungseinrichtung (30) ausgesendet werden, und daß an dem Werkstück (1, 2) oder der Meß- bzw. Bearbeitungseinrichtung (30) reflektierte Meßstrahlen durch mindestens einen im Raum angeordneten und als Empfangsmodul der Erfassungseinrichtung (10) ausgebildeten Sensor (10b) empfangen werden.

8. Verfahren nach Anspruch 7, **dadurch gekennzeichnet, daß** die Erfassung des Werkstücks (1, 2) und/oder der Meß- bzw. Bearbeitungseinrichtung (30) mittels Laser-Interferometrie vorgenommen wird.

9. Verfahren nach Anspruch 7 oder 8, **dadurch gekennzeichnet, daß** Reflexionselemente in unmittelbarer Nähe der zu erfassenden Flächen plaziert und daß an den Reflexionselementen reflektierte Strahlen von mindestens einem Empfangsmodul (10b) der Erfassungseinrichtung (10) empfangen werden.

10. Verfahren nach Anspruch 9, **dadurch gekennzeichnet, daß** die Reflexionselemente mindestens einen kugelförmigen Abschnitt aufweisen, an dem Meßstrahlen zum Empfangsmodul (10b) hin reflektiert werden.

11. Verfahren nach einem der vorhergehenden Ansprüche, **dadurch gekennzeichnet, daß** das mindestens eine Sendemodul (10a) der Erfassungseinrichtung (10) sich bei der Erfassung der Meß- bzw. Bearbeitungseinrichtung (30) definiert mit der Meß- bzw. Bearbeitungseinrichtung (30) im zweiten Koordinatensystem (22) mitbewegt.

12. Verfahren nach einem der Ansprüche 1 bis 10, **dadurch gekennzeichnet, daß** die Erfassungseinrichtung (10) bei der Erfassung der Meß- bzw. Bearbeitungseinrichtung (30) jeweils ortsfest angeordnet wird.

13. Verfahren nach einem der vorhergehenden Ansprüche, **dadurch gekennzeichnet, daß** die Meß- bzw. Bearbeitungseinrichtung (30) mindestens eine, bevorzugt mehrere und vorzugsweise einzeln ansteuerbare Meß- und/oder Bearbeitungseinheiten (33) aufweist.

14. Verfahren nach Anspruch 13, **dadurch gekennzeichnet, daß** die Meß- bzw. Bearbeitungseinrichtung (30) nahe an das Werkstück (1, 2) herangebracht wird und nachfolgend die einzelnen Meß- bzw. Bearbeitungseinheiten (33) in ihre Arbeitspositionen verfahren werden, um das Werkstück (1, 2) zu vermessen bzw. zu bearbeiten.

15. Verfahren nach einem der vorhergehenden Ansprüche, **dadurch gekennzeichnet, daß** die Meß- bzw. Bearbeitungseinrichtung (30) auf das Werkstück (1, 2) aufgesetzt wird.

16. Verfahren nach einem der Ansprüche 1 bis 14, **dadurch gekennzeichnet, daß** die Meß- bzw. Bearbeitungseinrichtung (30) berührungslos neben dem Werkstück plaziert wird.

## Claims

1. A method for measuring and/or machining a large workpiece (1,2) in building construction and consisting at least partially of concrete, especially a roadway carrier for rail-bound vehicles, by means of a measuring and/or machining device (30), in which the workpiece (1, 2) is determined in a first coordinate system (21) with the aid of at least one determining device (10) and that the measuring and/or machining device (30), that can move relative to the workpiece (1, 2) is determined in a second coordinate system (22) independently of the position and the shape of the workpiece (1, 2), and that the coordinates of the workpiece (1, 2) on the one hand and the coordinates of the measuring and/or machining device (30) on the other hand are brought into a relationship with each other by a computer (40) in order to control the measuring and/or machining device (30) for measuring and/or machining the workpiece (1, 2).

2. The method according to Claim 1, **characterized in that** the workpiece (1, 2) is arranged to be stationary.

3. The method according to Claim 1 or 2, **characterized in that** the first and the second coordinate systems (21, 22) are brought into a relationship with one another in a third coordinate system (23).

4. The method according to one of the previous claims, **characterized in that** the workpiece (1, 2) is determined in at least two partial determination steps, a relatively large section of the workpiece (1, 2) being determined with a rather low resolution in one partial determination step and in another partial determination step with a finer resolution a partial section of the larger section being determined, and that the data determined in the partial determination steps is adjusted by a computer.

5. The method according to one of the previous claims, **characterized in that** a deviation of the actual state of the workpiece (1, 2) from its theoretical state is calculated using the determined shape of the workpiece (1, 2) in order to determine the necessary machining steps.

6. The method according to one of the previous claims, **characterized in that** the measuring and/or machining device (30) is determined repeatedly and preferably step-by-step or continuously in the second coordinate system (22) during the measuring and/or machining of the workpiece (1, 2).

7. The method according to one of the previous claims, **characterized in that** measuring beams, especially laser beams, are transmitted from at least one transmitting module (10a) of the determining device (10) to the workpiece (1, 2) and/or to the measuring and/or machining device (30), and that measuring beams reflected on the workpiece (1, 2) or on the measuring and/or machining device (30) are received by at least one sensor (10b) arranged in space and designed as a receiving module of the determining device (10).

8. The method according to Claim 7, **characterized in that** the determining of the workpiece (1, 2) and/or of the measuring and/or machining device (30) is carried out by laser interferometry.

9. The method according to Claim 7 or 8, **characterized in that** reflection elements are placed in the immediate vicinity of the surfaces to be determined and that beams reflected on the reflection elements are received by at least one receiving module (10b) of the determining device (10).

10. The method according to Claim 9, **characterized in that** the reflection elements comprise at least one spherical section on which measuring beams are reflected toward the receiving module (10b).

11. The method according to one of the previous claims, **characterized in that** the at least one transmitting module (10a) of the determining device (10) moves in a defined manner with the measuring and/or machining device (30) in the second coordinate system (22) during the determining of the measuring and/or machining device (30).

12. The method according to one of Claims 1 to 10, **characterized in that** the determining device (10) is arranged in a stationary manner during the determining of the measuring and/or machining device (30).

13. The method according to one of the previous claims, **characterized in that** the measuring and/or machining device (30) comprises at least one, preferably several measuring and/or machining units (33) that can preferably be controlled individually.

14. The method according to Claim 13, **characterized in that** the measuring and/or machining device (30) is moved close to the workpiece (1, 2) and the individual measuring and/or machining units (33) are subsequently moved into their work positions in order to measure and/or machine the workpiece (1, 2).

15. The method according to one of the previous claims, **characterized in that** the measuring and/or machining device (30) is set onto the workpiece (1, 2).

16. The method according to one of Claims 1 to 14, **characterized in that** the measuring and/or machining device (30) is placed next to the workpiece without making contact with it.

## Revendications

1. Procédé pour la mensuration et/ou l'usinage d'une grande pièce à usiner (1, 2) se composant au moins partiellement de béton et relevant du domaine du génie civil, particulièrement un support de tronçon de voie pour véhicules sur rails, au moyen d'un dispositif de mensuration ou d'usinage (30), sachant que qu'à l'aide d'au moins un dispositif de saisie (10), la pièce à usiner (1, 2) est saisie dans un premier système de coordonnées (21), que le dispositif de mensuration ou d'usinage (30) déplaçable par rapport à la pièce à usiner (1, 2) est saisi dans un second système de coordonnées (22) indépendamment de la position et de la forme de la pièce à usiner (1, 2) et que les coordonnées de la pièce à usiner (1, 2), d'une part, et les coordonnées du dispositif de mensuration ou d'usinage (30), d'autre part, sont mises en rapport réciproquement au moyen d'un ordinateur (40) pour commander le dispositif de mensuration ou d'usinage (30) en vue de la mensuration ou de l'usinage de la pièce à usiner (1, 2).

2. Procédé selon la revendication 1, **caractérisé en ce que** la pièce à usiner (1, 2) est disposée de manière stationnaire.

3. Procédé selon l'une quelconque des revendications 1 ou 2, **caractérisé en ce que** le premier et le second système de coordonnées (21, 22) sont mis en rapport réciproquement dans un troisième système de coordonnées (23).

4. Procédé selon l'une quelconque des revendications précédentes, **caractérisé en ce que** la pièce à usiner (1, 2) est détectée en au moins deux étapes de détection partielles, sachant qu'une partie relativement grande de la pièce à usiner (1, 2) est détectée dans une première étape de détection partielle à une définition relativement faible, qu'une zone partielle de ladite partie relativement grande est détectée dans une autre étape de détection partielle à définition plus fine et que les données enregistrées dans les étapes de détection partielles sont comparées au moyen d'un ordinateur (40).

5. Procédé selon l'une quelconque des revendications précédentes, **caractérisé en ce qu'**un écart entre la forme réelle et la forme théorique de la pièce à usiner est calculé sur la base de la forme détectée de ladite pièce à usiner (1, 2) pour déterminer les étapes d'usinage nécessaires.

6. Procédé selon l'une quelconque des revendications précédentes, **caractérisé en ce que** le dispositif de mensuration ou d'usinage (30), dans le deuxième système de coordonnées (22), est détecté répétitivement, de préférence en pas à pas ou continuellement, pendant la mensuration ou l'usinage de la pièce à usiner (1, 2).

7. Procédé selon l'une quelconque des revendications précédentes, **caractérisé en ce que** des faisceaux de mesure, particulièrement des faisceaux laser, sont émis par au moins un module émetteur (10a) du dispositif de détection (10) à la pièce à usiner (1, 2) et/ou au dispositif de mensuration ou d'usinage (30), et **en ce que** des faisceaux de mesure réfléchis à la pièce à usiner (1, 2) ou au dispositif de mensuration ou d'usinage (30) sont captés par au moins un capteur (10b) disposé dans l'espace et se présentant sous la forme d'un module récepteur du dispositif de détection (10).

8. Procédé selon la revendication 7, **caractérisé en ce que** la détection de la pièce à usiner (1, 2) et/ou du dispositif de mensuration ou d'usinage (30) s'effectue au moyen de l'interférométrie laser.

9. Procédé selon l'une quelconque des revendications 7 ou 8, **caractérisé en ce que** des éléments de réflexion sont disposés à proximité immédiate des faces à détecter et que les faisceaux réfléchis aux éléments de réflexion sont reçus par au moins un module récepteur (10b) du dispositif de détection (10).

10. Procédé selon la revendication 9, **caractérisé en ce que** les éléments de réflexion comportent au moins une partie sphérique à laquelle des faisceaux de mesure sont réfléchis vers le module récepteur (10b).

11. Procédé selon l'une quelconque des revendications précédentes, **caractérisé en ce que** le module émetteur (10a), en nombre d'un au moins, du dispositif de détection (10) se déplace de manière définie lors de la détection du dispositif de mensuration ou d'usinage (30) de manière synchrone au déplacement dudit dispositif de mensuration ou d'usinage (30) dans le deuxième système de coordonnées (22).

12. Procédé selon l'une quelconque des revendications 1 à 10, **caractérisé en ce que** le dispositif de détection (10) est disposé respectivement de manière stationnaire lors de la détection du dispositif de mensuration ou d'usinage (30).

13. Procédé selon l'une quelconque des revendications précédentes, **caractérisé en ce que** le dispositif de mensuration ou d'usinage (30) comporte au moins une, de préférence plusieurs unités de mensuration et d'usinage (33) pouvant de préférence être commandées séparément.

14. Procédé selon la revendication 13, **caractérisé en ce que** le dispositif de mensuration ou d'usinage (30) est mis en position près de la pièce à usiner (1, 2) et que les différentes unités de mensuration ou d'usinage (33) sont ensuite déplacées à leurs positions de travail pour mensurer ou usiner la pièce à usiner (1, 2).

15. Procédé selon l'une quelconque des revendications précédentes, **caractérisé en ce que** le dispositif de mensuration ou d'usinage (30) se pose sur la pièce à usiner (1, 2).

16. Procédé selon l'une quelconque des revendications précédentes 1 à 14, **caractérisé en ce que** le dispositif de mensuration ou d'usinage (30) se place sans contact près de la pièce à usiner (1, 2).
